# FASCICULE DE BREVET EUROPEEN

(11) **EP 0 900 633 B1**
(45) Date de publication et mention de la délivrance du brevet: **28.08.2002**
(21) Numéro de dépôt: 98440140.6
(22) Date de dépôt: 26.06.1998
(51) Int. Cl.: B25B 27/10, F16L 1/09

(54) **Dispositif de pince pousse-bague**
Zange zum Aufschieben von Ringen
Ring pushing pliers

(30) Priorité: 03.09.1997 FR 9711104
(43) Date de publication de la demande: 10.03.1999
(73) Titulaire: Virax S.A., 51206 Epernay (FR)
(72) Inventeur: Aubriot, Claude, 51480 Damery (FR)
(74) Mandataire: Rhein, Alain

(56) Documents cités:
- EP-A- 0 341 180
- EP-A- 0 424 247
- WO-A-96/20807
- DE-C- 4 419 862
- DE-U- 9 307 957
- US-A- 2 719 695

## Description

La présente invention a pour objet un dispositif de pince pousse-bague utilisé dans le domaine de la plomberie pour l'emboîtement des tuyaux en matière plastique sur des raccords conformément an préambule de la revendication 1 (voir, par exemple, EP-A-0 341 180).

Dans le domaine de la plomberie, le métal pour la fabrication de la tuyauterie est petit-à-petit remplacé par la matière plastique ou par un complexe plastique-aluminium.

Les aboutements de tuyaux et les différentes dérivations sont réalisés par l'intermédiaire de raccords métalliques sur lesquels lesdits tuyaux sont emboîtés.

En pratique, l'extrémité du tuyau est évasée au moyen d'une pince à emboîture, puis emboîtée sur le raccord, l'élasticité de la matière plastique faisant qu'en reprenant sa forme initiale, l'extrémité du tuyau se solidarise audit raccord qui comporte périphériquement des moyens de retenue consistant en des saillies annulaires.

Cette solidarisation n'est toutefois pas suffisante, aussi, elle est complétée par la mise en place autour de l'extrémité du tuyau d'une bague, métallique, enfilée préalablement sur le tuyau, et poussée sur ladite extrémité au moyen d'une pince pousse-bague.

Les pinces pousse-bague actuellement connues comportent deux mors présentant chacun un évidement, l'un étant destiné à prendre appui sur le raccord tandis que le second, mobile en déplacement en direction du premier, prend appui sur la bague.

Afin de permettre l'adaptation de l'outil à des raccords et des bagues de profils et diamètres différents, les évidements peuvent accueillir des accessoires de formes et de diamètres variés.

La translation du mors mobile est actuellement essentiellement réalisée selon deux systèmes, comprenant soit une vis, soit une crémaillère.

Le système à vis comprend deux manches articulés l'un à l'autre par une de leurs extrémités, tandis que les autres extrémités comportent chacune un mors, et qu'une vis sans fin, manoeuvrable par une clé à cliquet, traversant lesdits manches, permet le déplacement d'un mors par rapport à l'autre.

Si la mise en place d'une bague au moyen d'un système à vis présente l'avantage de pouvoir être réalisée sans effort, elle n'en présente pas moins l'inconvénient d'être relativement longue, sans oublier la nécessité d'un dévissage pour le désengagement de la pince et la préparation à la mise en place d'une autre bague.

Le système à crémaillère quant à lui comprend un corps comportant un mors et dans lequel peut se déplacer un coulisseau supportant le second mors et présentant une crémaillère actionnée par un levier associé à un cliquet.

Pour pouvoir supporter l'effort nécessaire lors de la mise en place d'une bague, notamment en raison du déport entre la crémaillère et les mors, il est nécessaire que le corps et le coulisseau soit de conception robuste, d'où l'emploi de matériaux lourds qui rendent l'utilisation de la pince fatigante à la longue.

D'autre part, les pinces utilisant un système à crémaillère comportent un dispositif de débrayage, qui ne permet toutefois pas un désengagement rapide en fin de travail.

La présente invention à pour but de remédier à ces divers inconvénients en proposant un dispositif de pince pousse-bague dont la conception permet qu'il soit fabriqué dans un alliage léger.

Le dispositif objet de la présente invention est défini par les caractéristiques de la revendication 1.

Selon un premier mode de réalisation du dispositif selon l'invention, les rainures du corps, du coulisseau et des mors sont disposées dans le sens transversal.

Selon un second mode de réalisation du dispositif selon l'invention les rainures du corps, du coulisseau et des mors sont en forme de U, elles comportent chacune deux parties parallèles à l'axe de déplacement du coulisseau, et une partie transversale positionnée du côté interne, lesdites rainures du corps étant de section transversale en T.

Selon une caractéristique additionnelle du dispositif selon l'invention des moyens d'indexage permettent le positionnement des mors.

Conformément à l'invention, le moyen d'indexage consiste en une bille repoussée par un ressort.

La fixation des mors par rainures longitudinales ou transversales permet d'abaisser au maximum le moment fléchissant sur le coulisseau et sur le corps, ce qui autorise l'emploi d'un alliage léger.

Selon une autre caractéristique additionnelle du dispositif selon l'invention, un ressort à boudin, solidaire du corps par l'une de ses extrémités, est introduit dans une cavité de forme approximativement tubulaire, légèrement évasée, pratiquée dans ledit doigt selon un axe passant entre ledit ergot et l'axe de pivotement dudit doigt.

Les avantages et les caractéristiques de la présente invention ressortiront plus clairement de la description qui suit et qui se rapporte au dessin annexé, lequel en représente un mode de réalisation non limitatif.

Dans le dessin annexé :
- la figure 1 représente une vue partielle en coupe d'un dispositif de pince pousse-bague selon l'invention.
- la figure 2 représente une vue partielle en coupe du même dispositif lors de son manoeuvrement.
- la figure 3 représente une vue partielle en coupe d'une variante du même dispositif.
- la figure 4 représente une vue en coupe selon l'axe XX de la figure 3.

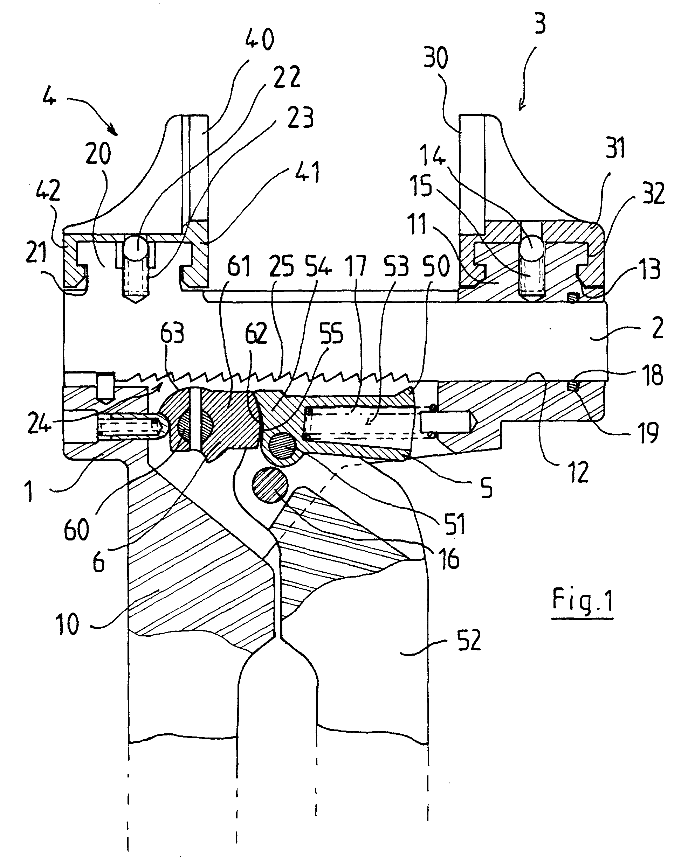

Si on se réfère à la figure 1, on peut voir qu'un dispositif de pince pousse-bague selon l'invention comporte un corps 1 dans lequel peut se déplacer un coulisseau 2.

Le corps 1 comporte, à l'arrière et inférieurement, un manche 10, et à l'avant et supérieurement une partie 11 présentant une ouverture 12 dans laquelle est engagé étroitement le coulisseau 2, l'ouverture 12 et la partie du coulisseau 2 qui y est engagée étant de section ronde.

La partie 11 est surmontée d'un mors 3 présentant un évidement 30 hémicylindrique.

La solidarisation du mors 3 à la partie 11 est réalisée par coulissement dans le sens transversal, la base 31 du mors 3 et la partie 11 étant de profils complémentaires, elles comportent notamment des rainures respectivement 32 et 13.

De même, un mors 4, présentant un évidement hémicylindrique 40 et une base 41, est assemblé à la partie arrière 20 du coulisseau 2, la solidarisation étant identique, par l'intermédiaire de rainures transversales respectivement 42 et 21.

Les mors 3 et 4 sont destinés, selon le profil des évidements 30 et 40, à être adaptés soit sur un raccord, soit sur une bague, non représentés, ils peuvent être solidarisés indifféremment soit au coulisseau 2, soit au corps 1, le choix étant fonction des facilités d'accès au raccord.

On notera que le centrage des mors 3 et 4 sur, respectivement, le corps 1 et le coulisseau 2, est réalisé par l'intermédiaire de moyens d'indexage comprenant une bille, 14 et 22, et un ressort, 15 et 23.

Sur la figure 1, on peut voir également que le coulisseau 2 comporte à la face inférieure une crémaillère 24, dans les crans 25 de laquelle peut s'engrener l'ergot 50 d'un doigt 5 articulé sur un pivot 51, à l'extrémité d'un manche 52, lui-même articulé sur le corps 1 autour d'un pivot 16 jouxtant le pivot 51.

Le doigt 5 présente intérieurement une cavité 53 abritant un ressort à boudin 17 solidaire du corps 1 par l'une de ses extrémités, et disposé sous le coulisseau 2, parallèlement à celui-ci.

La cavité 53 est évasée, et son axe passe entre l'ergot 50 et le pivot 51, en sorte que le ressort à boudin 17, du fait de sa relative liberté de mouvement dans la cavité 53 et de son excentration par rapport au pivot 51, tend à faire pivoter le doigt 5 sur le pivot 51 et à mettre en relation l'ergot 50 et les crans 25 de la crémaillère 24.

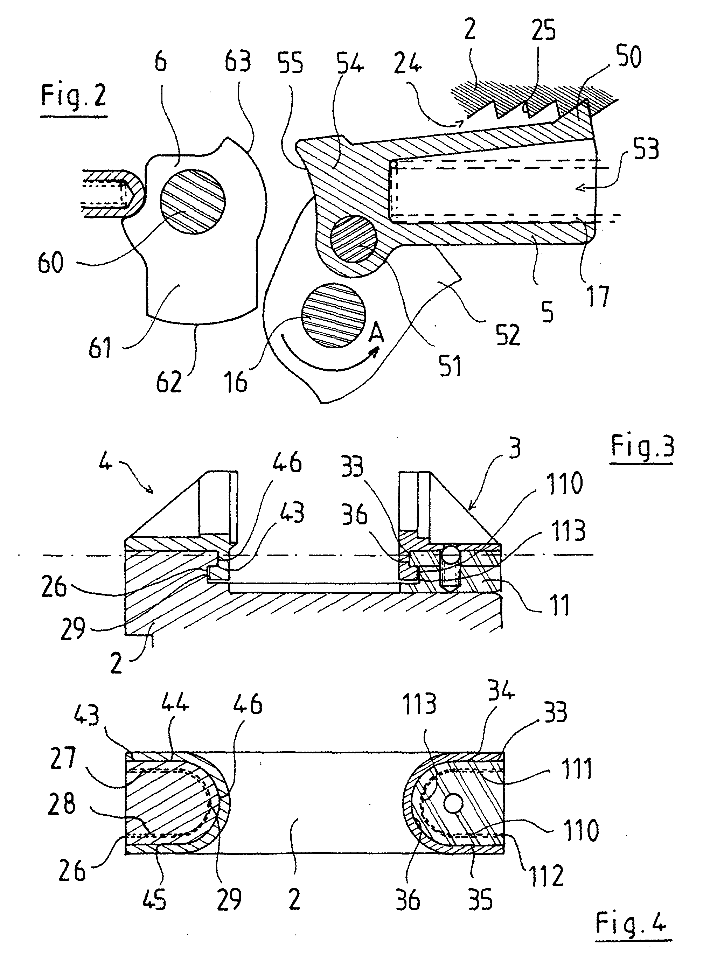

Si on se réfère maintenant à la figure 2, on peut voir que le pivotement du manche 52 sur le pivot 16 dans le sens de la flèche A en écartement du manche 10, non représenté, permet le recul et la montée de la partie pivotante 54 du doigt 5, l'ergot 50 se libérant des crans 25 de la crémaillère 24.

On notera qu'afin d'éviter que le doigt 5 lors de son recul n'entraîne le coulisseau 2, outre la forme du doigt 50 et des crans 25, le coulisseau 2 est maintenu étroitement, comme cela est représenté sur la figure 1, au moyen d'un jonc torique 18 logé dans une gorge annulaire 19 pratiquée dans la partie 11 en périphérie de l'évidement 12.

Lors du pivotement du manche 52 dans le sens inverse, c'est-à-dire lorsque le manche 52 est rapproché du manche 10, l'ergot 50 s'engrène dans un cran 25 ce qui entraîne le déplacement du coulisseau 2.

Sur les figures 1 et 2 on peut voir qu'un verrou 6, positionné en regard de l'extrémité pivotante du doit 5 et constitué d'une pièce montée pivotante autour d'un pivot 60, est susceptible de prendre deux positions indexées.

Comme cela est représenté sur la figure 1, le verrou 6 comporte un bossage 61 qui prend appui contre l'extrémité pivotante 54 du doigt 5, mais de manière excentrée afin d'une part à empêcher le déplacement du doigt donc du manche 52, et d'autre part à maintenir l'ergot 50 désengagé de la crémaillère 24.

Dans cette position, le verrou 6 permet le débrayage du doigt 5, ce qui autorise un désengagement aisé de la pince après son utilisation.

Afin de maintenir l'ergot 50 écarté de la crémaillère 24, le bossage 61 comporte un bord périphérique 62 convexe, tandis que le bord 55 l'extrémité 54 est de forme complémentaire concave, ce qui permet un centrage.

Sur la figure 2 le verrou 6 est ouvert, ce qui permet le déplacement du doigt 5.

On notera que le verrou 6 comporte à la base du bossage 60 un bord convexe 63 contre lequel prend appui le bord 55 du doigt 5 lorsque celui-ci est dans la position la plus reculée, c'est-à-dire lorsque le manche 52 est en position ouverte au maximum, ce qui permet de débrayer le doigt 5.

Le débrayage, manche 52 en position ouverte ou fermée, permet un rapprochement rapide des mors 3 et 4 sur le raccord et un dégagement également rapide de la pince en fin de travail.

Si on se réfère maintenant aux figures 3 et 4, on peut voir que, selon une variante du dispositif selon l'invention, la solidarisation des mors 3 et 4 sur respectivement la partie 11 du corps 1 et la partie 20 du coulisseau 2, est réalisée également par emboîtement, par l'intermédiaire des rainures en forme de U.

Ainsi, la partie 11 comporte une rainure 110 présentant deux parties 111 et 112 parallèles à l'axe de déplacement du coulisseau 2 et une partie courbe transversale 113, tandis que la base 31 du mors 3 comporte une rainure 33 présentant deux parties 34 et 35 parallèles à l'axe de déplacement du coulisseau 2 et une partie courbe transversale 36.

De même, la partie 20 comporte une rainure 26 présentant deux parties 27 et 28 parallèles à l'axe de déplacement du coulisseau 2 et une partie courbe transversale 29, tandis que la base 41 du mors 4 comporte une rainure 43 présentant deux parties 44 et 45 parallèles à l'axe de déplacement du coulisseau 2 et une partie courbe transversale 46.

Le blocage des mors 3 et 4 peut également être réalisé par un moyen d'indexage du type bille et ressort, représenté uniquement pour le mors 3.

## Revendications

1. Dispositif de pince pousse-bague utilisable dans le domaine de la plomberie pour l'emboîtement des tuyaux en matière plastique ou en un complexe plastique-aluminium sur des raccords du type comprenant un corps (1) dans lequel peut se déplacer un coulisseau (2) présentant une crémaillère (24) sur laquelle s'engrène un doigt (5) solidaire de l'extrémité d'un manche (52) articulé en pivotement sur ledit corps (1) et deux mors (3,4) ayant des formes adaptées aux bagues et raccords à assembler, **caractérisé en ce que** lesdits mors (3,4) étant rapportés respectivement sur le corps (1) et le coulisseau (2), ledit corps (1) et ledit coulisseau (2) comportent chacun supérieurement des rainures (13,21,110,26) permettant l'assujetissement par coulissement desdits mors (3,4) qui comportent à cet effet des rainures (32,42,33,43) complémentaires de celles dudit corps (1) et dudit coulisseau (2), le doigt d'accouplement (5) est monté en pivotement à l'extrémité du manche articulé (52) par son extrémité (55) opposée à celle s'engrenant sur la crémaillére (24) et qui comporte à cet effet un ergot (50) de forme complémentaire de celle des crans (25) de ladite crémaillére (5) et **en ce qu'**un verrou (6) est positionné en regard de l'extrémité pivotante (55) du doigt (5) et est monté pivotant sur un pivot (60) pour prendre deux positions indexées.

2. Dispositif selon la revendication 1 **caractérisé en ce qu'**un ressort à boudin (17), solidaire du corps (1) par l'une de ses extrémités, est introduit dans une cavité (53) de forme approximativement tubulaire, légèrement évasée, pratiquée dans ledit doigt (5) selon un axe passant entre ledit ergot (50) et l'axe de pivotement (51) dudit doigt.

3. Dispositif selon la revendication 1 ou la revendication 2 **caractérisé en ce que** le verrou (6) comporte un bossage (61) dont le bord extrême convexe (62) peut, selon la position dudit verrou (6) prendre appui contre l'extrémité pivotante (54) du doigt (5) qui est concave et excentrée par rapport au pivot (51) dudit doigt (5), pour permettre le désengagement de l'ergot des crans (25) de la crémaillère (24) et le blocage de la pince en position fermée, les manches (10,52) étant rapprochés.

4. Dispositif selon la revendication 3 **caractérisé en ce que** le verrou (6) comporte, à la base du bossage (61), un bord (63) de forme convexe contre lequel peut, selon la position du verrou (6), prendre appui le bord (55) de l'extrémité pivotante (54) du doigt (5) lorsque celui-ci est dans la position la plus reculée, afin de permettre le désengagement de l'ergot (50) des crans (25) de la crémaillère (24).

5. Dispositif selon l'une quelconque des revendications précédentes **caractérisée en ce que** le coulisseau (2) se déplace dans un évidement (12) pratiqué dans le corps (1) ou il est maintenu étroitement par un jonc torique (18) logé dans une gorge annulaire (19).

6. Dispositif selon l'une quelconque des revendications précédentes **caractérisé en ce que** les rainures (13,21,32,42) du corps (1), du coulisseau (2) et des mors (3,4) sont disposées dans le sens transversal à l'axe de déplacement du coulisseau (2) relativement au corps (1).

7. Dispositif selon l'une quelconque des revendications 1 à 5 **caractérisé en ce que** les rainures (110,26,33,43) du corps (1), du coulisseau (2) et des mors sont en forme de U, elles comportent chacune deux parties (111,112,27,28,35,44,45) parallèles à l'axe de déplacement du coulisseau, et une partie transversale (113,29,36,46) à l'axe de déplacement du coulisseau positionné vers la zone de serrage, lesdites rainures (33,43) du corps étant de section transversale en T.

8. Dispositif selon l'une quelconque des revendications précédentes **caractérisé en ce que** des moyens d'indexage (14,15,22,23) permettent le positionnement des mors (3,4).

9. Dispositif selon la revendication 8 **caractérisé en ce que** les moyens d'indexage consistent en une bills (14,22) repoussée par un ressort (15,23).

## Claims

1. Ring-pushing clamp device for use in the field of plumber's work for fitting pipes made of plastic or a plastic-aluminium complex onto a connector, of the type comprising a body (1) in which can move a slide (2) having a rack (24) with which engages a finger (5) integral with the end of a shaft (52) pivotally hinged to said body (1) and two clamping jaws (3, 4) the shapes of which are adapted to the rings and the connectors to be assembled, **characterised in that** said clamping jaws (3, 4) are inserted against the body (1) and the slide (2), respectively, said body (1) and said slide (2) each including, at the top, grooves (13, 21, 110, 26) allowing fixing, through sliding, said clamping jaws (3, 4) that include, for this purpose, grooves (32, 42, 33, 43) complementary to those of said body (1) and said slide (2), **in that** the coupling finger (5) is pivotally mounted at the end of the hinged shaft (54), through its end (55) opposite that engaging with the rack (24) and including, for this purpose, a pawl (50) having a shape complementary to that of the notches (25) of said rack (5), and **in that** a latch (6) is positioned in front of the pivoting end (55) of the finger (5) and is pivotally mounted on a pivot (60), in order to adopt two indexed positions.

2. Device according to claim 1, **characterised in that** a helical spring (17), integral with the body (1) through its one end, is inserted into a cavity (53), having an approximately tubular, slightly widened shape, provided for in said finger (5), according to an axis passing between said pawl (50) and the axis of pivoting (51) of said finger.

3. Device according to claim 1 or claim 2, **characterised in that** the latch (6) includes a boss (61) the convex end edge (62) of which can, according to the position of said latch (6), rest against the pivoting end (54) of the finger (5) that is concave and eccentric with respect to the pivot (51) of the finger (5), in order to allow releasing the pawl from the notches (25) of the rack (24) and locking the clamp in closed position, the shafts (10, 52) being close to each other.

4. Device according to claim 1, **characterised in that** the latch (6) includes, at the base of the boss (61), an edge (63) having a convex shape against which can rest, according to the position of the latch (6), the edge (55) of the pivoting end (54) of the finger (5) when the latter is in the farthest-away position, in order to allow releasing the pawl (50) from the notches (25) of the rack (24).

5. Device according to any of the preceding claims, **characterised in that** the slide (2) moves in a recess (12) provided for in the body (1), in which it is closely retained by a O-ring (18) accommodated in an annular groove (19).

6. Device according to any of the preceding claims, **characterised in that** the grooves (13, 21, 32, 42) of the body (1), of the slide (2) and of the clamping jaws (3, 4) are arranged in the direction transversal to the axis of displacement of the slide (2) with respect to the body (1).

7. Device according to any of claims 1 to 5, **characterised in that** the grooves (110, 26, 33, 43) of the body (1), of the slide (2) and of the clamping jaws are U-shaped, each include two portions (111, 112, 27, 28, 35, 44, 45) parallel to the axis of displacement of the slide and a portion (113, 29, 36, 46) transversal to the axis of displacement of the slide, positioned towards the clamping area, said grooves (33, 43) of the body having a T-shaped cross-section.

8. Device according to any of the preceding claims, **characterised in that** indexing means (14, 15, 22, 23) allow positioning the clamping jaws (3, 4).

9. Device according to claim 8, **characterised in that** the indexing means consist of a ball (14, 22) pushed back by a spring (15, 23).

## Patentansprüche

1. Ringstoß-Klammervorrichtung für Verwendung im Bereich der Bleigießereiarbeiten zum Ineinanderfügen von Rohren aus Kunststoff oder aus einem Kunststoff-Aluminium-Komplex auf ein Verbindungsstück, die einen Körper (1) umfaßt, in dem sich ein Schieber (2) verschieben kann, der eine Zahnstange (24), in die ein Finger (5) eingreift, der fest mit dem Ende eines am genannten Körper (1) schwenkbar befestigten Griffes (52) verbunden ist, und zwei Klemmbacken (3, 4), deren Gestalten den zu verbindenden Ringen und Anschlußstücken angepaßt sind, aufweist, **dadurch gekennzeichnet, daß** die genannten Klemmbacken (3, 4) an dem Körper (1) bzw. dem Schieber (2) angebracht sind, wobei der genannte Körper (1) und der genannte Schieber (2) an ihrem oberen Teil jeweils Nuten (13, 21, 110, 26) umfassen, die das Befestigen durch Schieben der genannten Klemmbacken (3, 4) erlauben, die zu diesem Zweck Nuten (32, 42, 33, 43) umfassen, die diejenigen des genannten Körpers (1) und des genannten Schiebers (2) ergänzend sind, daß der Kopplungsfinger (5) mit seinem Ende (55), das demjenigen, das in die Zahnstange (24) eingreift, gegenüberliegt und hierzu eine Nase (50) einer diejenige der Einschnitten (25) der genannten Zahnstange (5) ergänzenden Gestalt umfaßt, schwenkbar am Ende des gelenkigen Griffes (52) montiert ist, und daß ein Riegel (6) dem schwenkbaren Ende (55) des Fingers (5) gegenüber positioniert und schwenkbar auf einem Zapfen (60) montiert ist, um zwei indexierte Stellungen einzunehmen.

2. Vorrichtung nach Anspruch 1, **dadurch gekennzeichnet, daß** eine mit ihrem einem Ende fest mit dem Körper (1) verbundene Spiralfeder (17) gemäß einer zwischen der genannten Nase (50) und der Schwenkungsachse (51) des genannten Fingers verlaufenden Achse in einen ungefähr rohrförmigen, geringfügig erweiterten, im genannten Finger (5) vorgesehenen Hohlraum (53) eingeführt wird.

3. Vorrichtung nach Anspruch 1 oder Anspruch 2, **dadurch gekennzeichnet, daß** der Riegel (6) einen Auswuchs (61) umfaßt, dessen konvexen Endrand (62) je nach der Stellung des genannten Riegels (6) an das schwenkbare Ende (54) des Fingers (5), das konkav und bezüglich des Zapfens (51) des Fingers (5) exzentrisch ist, anlehnen kann, um das Loslösen der Nase aus den Einschnitten (25) der Zahnstange (24) und das Festsetzen der Klammer in geschlossener Stellung zu erlauben, wobei die Griffe (10, 52) nahe an einander liegen.

4. Vorrichtung nach Anspruch 1, **dadurch gekennzeichnet, daß** der Riegel (6) an der Base des Auswuchses (61) einen Rand (63) konvexer Gestalt umfaßt, an den je nach der Stellung des Riegels (6) der Rand (55) des schwenkbaren Endes (54) des Fingers (5) anlehnen kann, wenn sich dieser letzte in der am meisten entfernten Stellung befindet, um das Loslösen der Nase (50) aus den Einschnitten (25) der Zahnstange (24) zu erlauben.

5. Vorrichtung nach irgendeinem der vorgehenden Ansprüche, **dadurch gekennzeichnet, daß** sich der Schieber (2) in einer im Körper (1) vorgesehenen Aussparung (12) verschiebt, wo er durch einen in einer ringförmigen Nut (19) untergebrachten O-Ring (18) eng gehalten wird.

6. Vorrichtung nach irgendeinem der vorgehenden Ansprüche, **dadurch gekennzeichnet, daß** die Nuten (13, 21, 32, 42) des Körpers (1), des Schiebers (2) und der Klemmbacken (3, 4) in der Richtung quer zur Verschiebungsachse des Schiebers (2) bezüglich des Körpers (1) angeordnet sind.

7. Vorrichtung nach irgendeinem der Ansprüche 1 bis 5, **dadurch gekennzeichnet, daß** die Nuten (110, 26, 33, 43) des Körpers (1), des Schiebers (2) und der Klemmbacken U-förmig sind, jeweils zwei Teile (111, 112, 27, 28, 35, 44, 45) parallel zur Verschiebungsachse des Schiebers und einen zum Festklemmbereich hin positionierten Teil (113, 29, 36, 46) quer zur Verschiebungsachse des Schiebers umfassen, wobei die genannten Nuten (33, 43) des Körpers im Querschnitt T-förmig sind.

8. Vorrichtung nach irgendeinem der vorgehenden Ansprüche, **dadurch gekennzeichnet, daß** Indexiermittel (14, 15, 22, 23) die Positionierung der Klemmbacken (3, 4) erlauben.

9. Vorrichtung nach Anspruch 8, **dadurch gekennzeichnet, daß** die Indexiermittel aus einem durch eine Feder (15, 23) zurückgestoßenen Ball (14, 22) bestehen.
